# EUROPEAN PATENT SPECIFICATION

(11) **EP 2 268 079 B1**
(45) Date of publication and mention of the grant of the patent: **04.07.2012**
(21) Application number: 09290337.6
(22) Date of filing: 07.05.2009
(51) Int. Cl.: H04W 36/08, H04W 16/32, H04W 84/04

(54) **Identifying a base station from a set of handover candidate base stations that use the same primary scrambling code**
Ermittlung einer Basisstation aus einer Reihe von Handover-Kandidatenbasisstationen, die denselben primären Verwürfelungskode verwenden
Identification d'une station de base parmi des stations de base candidates au transfert qui utilisent le même code de brouillage principal

(43) Date of publication of application: 29.12.2010
(73) Proprietor: Alcatel Lucent, 75007 Paris (FR)
(72) Inventor: Brend, Graham, Bath, BA1 7UE (GB); Sapiano, Philip, Corsham, Wiltshire, SN13 9AY (GB); Bradley, Nigel, Cricklade, SN6 6LT (GB); Putman, Tony, Chippenham, SN15 5AQ (GB)
(74) Representative: Sarup, David Alexander

(56) References cited:
- WO-A-2005/101890
- WO-A-2008/055251
- WO-A-2008/088592
- US-A1- 2007 105 527

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as microcells, picocells, or femtocells, but we use the term femtocells generically for cells that are smaller than macrocells. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell.

Femtocell base stations are intended primarily for users belonging to a particular home or office. Femtocell base stations may be private access or public access. In femtocell base stations that are private access, access is restricted only to registered users, for example family members or particular groups of employees. In femtocell base stations that are public access, other users may also use the femtocell base station, subject to certain restrictions to protect the Quality of Service received by registered users.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications.

Femtocell base stations are sometimes referred to as femtos.

One problem of femtocell base stations, particularly those involving code division multiple access, such as those in accordance with current Third Generation Partnership Project (3GPP) Universal Mobile Telecommunications System (UMTS) standards, is that there are few primary scrambling codes (PSCs) available. Primary scrambling codes are broadcast by base stations over the radio interface and are used to distinguish between neighbouring base stations. Typically, there are between six and sixteen PSCs that are available to the femtocells. The PSC to be used by each femtocell base station is normally selected by an automatic configuration process based on measurements made by that femtocell base station. For example, a femto detects from received signals which PSCs are in use by other base stations around that femto, and selects a PSC that the femto has not detected as being in use, else it selects the I'SC of the weakest signal received. In consequence typically each of the available primary scrambling codes is used by multiple femtos, in other words much primary scrambling code "re-use".

As is known, user terminals, currently in a cell, make measurements as to signals received from other nearby base stations and report these measurements to the base station of that cell. This is so as to determine whether it is appropriate to handover the call connection with the user terminal from that cell to another cell from which a stronger or better quality signal is received.

With this level of PSC reuse, there is a strong chance that user terminals served by a femto will detect signals from multiple different cells having the same primary scrambling code. There is no unique cell identifier, Cell ID, reported in the user terminal's measurement report according to current 3GPP standards. Accordingly, there is ambiguity or uncertainty as to which of the neighbouring femtos using that PSC provides the best signal to the user terminal and so should be the handover target.

This problem in uniquely identifying which is the best femto target arises both in the case of macrocell to femtocell handovers and also in the case of femto to femto handovers.

A known approach is to seek to handover to all of the femtocells that arc identified as using the primary scrambling code of the best received signal. This is inefficient because only one of the handover attempts is permitted to succeed. Network resources are wasted that are used in the handover attempts to the other femtocells than the one that is successful.

To determine which of the neighbouring femtos using that PSC provides the best signal to the user terminal and so should be the handover target, a known approach is for the femtocell base station to cease to transmit and instead receive at the frequency that user terminals receive at, in order to detect neighbouring femtos. This is known as sniffling. This works in detecting neighbouring femtos that are strongly transmitting, but may not detect every femto that the user terminal would detect as a handover candidate.

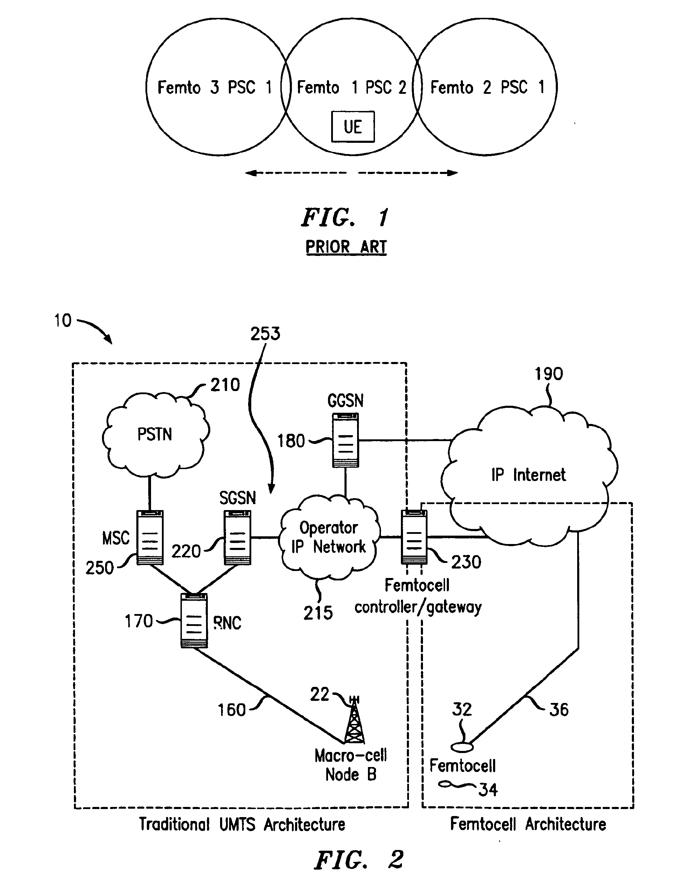

As shown in Figure 1, the femtocells denoted Femto2 and Femto3 are neighbours of Femto 1. Femto2 and Femto3 both use the same primary scrambling code PSC1 whilst Femto1 uses a different primary scrambling code PSC2.

Because Femto2 and Femto3 both use the same primary scrambling code PSC1, when a user terminal UE connected to Femto 1 moves towards Femto2, it will send a measurement report indicating that the target femto is that using PSC1. However this PSC is used by Femto3 also. Since Femto 1 has previously "sniffed" and detected that both Femto2 & Femto3 use PSC 1, it does not know whether the UE is moving towards Femto2 or Femto3, and hence which one of those two should be the handover target.

It is known from International (P.C.T.) Patent Publication WO2008/088592 to provide a method of identifying a base station to which to handover a call connection with a user terminal, the method comprising: comparing the target cell primary scrambling code in a report of signals detected by the user terminal to those expected from base stations to determine a set of handover candidate base stations

### Summary

The present invention is characterised over the disclosure of WO 2008/088592 by the method further comprising comparing the other primary scrambling codes in the report of signals detected by the user terminal to those expected according to a record identifying for each handover candidate base station its neighbouring base stations and the primary scrambling codes of the neighbouring base stations, and upon a match being found by this comparison the base station for handover is identified.

The reader is referred to the appended independent claims. Some preferred features are laid out in the dependent claims.

Some preferred embodiments provide simple, effective target cell identification for handovers, particularly in Universal Mobile Telecommunications System (UMTS) networks. Efficient selection of the base station to handover to is useful on maintaining a high quality of service to user terminals.

Some embodiments have the femtocell controller/gateway identify the target base station for handover. Some embodiments have the source base station for handover, such as a source femto, identify the target base station for handover.

Preferred embodiments provide useful solutions when there is primary scrambling code reuse within a network. In preferred embodiments, the use made of the information as to the PSCs of neighbours of candidate target base stations in identifying target base stations reduces the probability of dropped calls and wasted radio resources.

### Brief Description of the Drawings

Embodiments of the present invention will now be described by way of example and with reference to the drawings, in which:
Figure 1 is a diagram illustrating a known situation in identifying handover targets for a user terminal (PRIOR ART)
Figure 2 is a diagram illustrating a wireless communications network according to a first embodiment of the present invention,
Figure 3 is a diagram illustrating an example femtocell base station deployment within one macrocell shown in Figure 2,
Figure 4 is a diagram illustrating in more detail a femtocell controller/gateway as shown in Figure 2,
Figure 5 is a diagram illustrating the example femtocell deployment shown in Figure 3 in more detail,
Figure 6 is a message sequence diagram in respect of a macrocell-to-femtocell handover operation in the deployment shown in Figure 5,
Figure 7 is a diagram illustration the topology map stored in the femtocell controller/gateway in respect of the femtocell deployment shown in Figure 5.
Figure 8 is a flowchart illustrating how, in the handover operation shown in Figure 7, the topology map shown in Figure 6 is used to select the target femtocell,
Figure 9 is a diagram illustrating an example femtocell deployment according to a second embodiment of the present invention,
Figure 10 is a message sequence diagram in respect of a femtocell-to-femtocell handover operation in the femtocell deployment shown in Figure 9,
Figure 11 is a diagram illustration the topology map stored in the femtocell controller/gateway in respect of the femtocell deployment shown in Figure 9, and
Figure 12 is a flowchart illustrating how, in the handover operation shown in Figure 10, the topology map shown in Figure 11 is used to select the target femtocell.

### Detailed Description

We now describe a network including femtocell base stations then look in greater detail at a femtocell base station and the relevant operation of the femtocell base station.

### Network

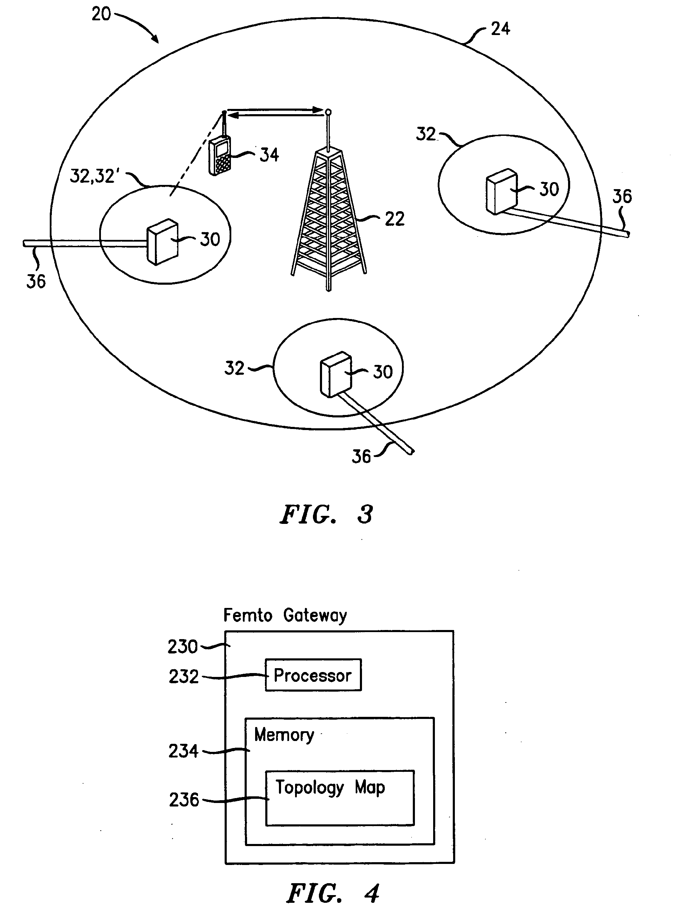

As shown in Figures 2 and 3, a network 10 for wireless communications, through which a user terminal 34 may roam, includes two types of base station, namely macrocell base stations and femtocell base stations (the latter being sometimes called "femtos"). One macrocell base station 22 is shown in Figures 2 and 3 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 2, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network such as a public switched telephone network (PSTN) 210. For packet-switched traffic, the network controller 170 communicates with serving general packet radio service support nodes (SGSNs) 220 and a gateway general packet radio support node (GGSN) 180. The GGSN then communicates with a packet-switch core 190 such as, for example, the Internet.

The MSC 250 , SGSN 220, GGSN 180 and operator IP network constitute a so-called core network 253. The SGSN 220 and GGSN 180 are connected by an operator IP network 215 to a femtocell controller/gateway 230.

The femtocell controller/gateway 230 is connected via the Internet 190 to the femtocell base stations 30. These connections to the femtocell controller/gateway 230 are broadband Internet Protocol connections ("backhaul") connections.

In Figure 3, three femtocell base stations 30 and corresponding femtocells 32 are shown for simplicity.

It is possible for a mobile terminal 34 within the macrocell 24 to communicate with the macrocell base station 22 in known manner. When the mobile terminal 34 enters into a femtocell 32 for which the mobile terminal is registered for communications with the femtocell base station 30, it is desirable to handover the connection with the mobile terminal from the macrocell to the femtocell. In the example shown in Figure 3, the user of mobile terminal 34 is a preferred user of the nearest 32' of the femtocells 32.

As shown in Figure 3, the femtocell base stations 30 are connected via the broadband Internet Protocol connections ("backhaul") 36 to the core network (not shown in Figure 3) and hence the rest of the telecommunications "world" (not shown in Figure 3). The "backhaul" connections 36 allow communications between the femtocell base stations 30 through the core network (not shown). The macrocell base station is also connected to the core network (not shown in Figure 3).

### Femtocell controller/gateway

As shown in Figure 4, the femtocell controller/gateway includes a processor 232 connected to a memory 234. Information 236 about the base stations in the network are stored in the memory 234; for convenience this information 236 is referred to as a topology map.

### Macrocell to Femtocell Handover

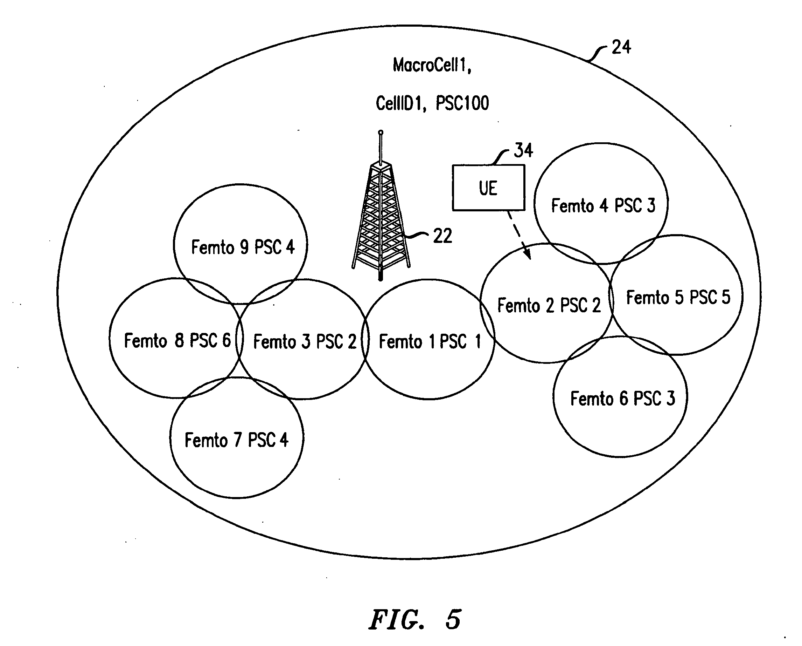

As shown in more detail in Figure 5, in this example, within the macrocell 24 (denoted Macrocell 1) having a unique identifier CeIIID1 and a primary scrambling code denoted PSC100, nine femtos are shown. Of these nine, Femto1 uses primary scrambling code PSC 1 whilst Femto2 and Femto3, which are neighbours to Femto1 both use primary scrambling code PSC2. Femto2 also has neighbouring femtos: Femto4, Femto5 and Femto6. Femto4 and Femto6 both use PSC3. Femto5 uses PSC5. Femto3 also has neighbouring femtos: Femto7, Femto8 and Femto9. Femto7 and Femto9 both use PSC4. Femto8 uses PSC6. There is a user terminal UE moving within the macrocell.

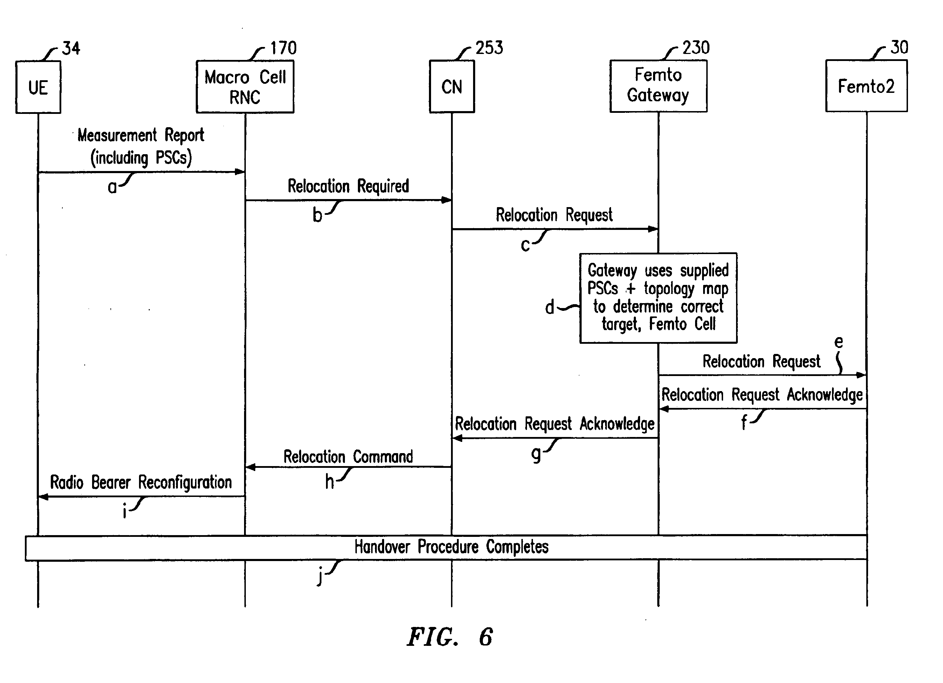

Referring to Figure 6, which is a Universal Mobile Telecommunications System (UMTS) example, the user terminal 34 sends measurement reports via the macrocell base station 22 to which it is connected, to the Radio Network Controller 170. Each report includes data of the received signal strength and quality of signals received from various femtos together with the respective primary scrambling codes used. The measurement reports are of known type, for example 1A, 1B or 1C as defined in Third Generation Partnership Project (3GPP) Technical Specification TS25.331. In particular the user terminal 34 sends (step a as shown in Figure 6) a measurement report that indicates that a femtocell is detected that provides a better quality connection than the current macrocell ("MacroCelll") and that femto uses PSC2. The measurement report provides signal quality information for signals having PSCs in a monitored set, namely PSC1, PSC2 , PSC3 and PSC5.

The RNC 170 then sends (step b) a relocation request message to the core network 253. The core network 253 sends (step c) the relocation request on to the femtocell controller/gateway 230. This relocation request includes the UE Measurement Report, the primary scrambling code PSC2 of the femto, the primary scrambling code and unique cell identifier (Cell ID) of the macrocell, and a list of PSCs of the other cells that are in a monitored set detected by the user terminal 34. In this example, these primary scrambling codes are those of Femto 1, Femto4, Femto5 and Femto6, namely PSC1, PSC3, and PSC5.

As a next step, the femtocell controller/gateway 230 uses the primary scrambling codes supplied together with the 'topology map', in other words the recorded information about neighbour relations between base stations, in order to identify the correct femto as the target for handover of the call connection with the user terminal 34. In this case, as between Femto2 and Femto3, both of which use PSC2, the target is identified as being Femto2. The femtocell controller/gateway 230 then forwards (step e) the relocation request to Femto2, which replies (step f) with a relocation request acknowledgement. This acknowledgement is received by the femtocell controller/gateway 230 and forwarded (step g) to the core network 253. The core network responds (step h) by sending a relocation command to the RNC 170. The RNC then sends (step i) a radio bearer reconfiguration message to the user terminal 34 so as to effect the handover to the identified femto, namely Femto2.

The messages shown in Figure 6 are standardised in Universal Mobile Telecommunications System (UMTS). The handover procedure is then completed (step j) in a manner known to the skilled person in the art.

We shall now consider in more detail the topology map and its use.

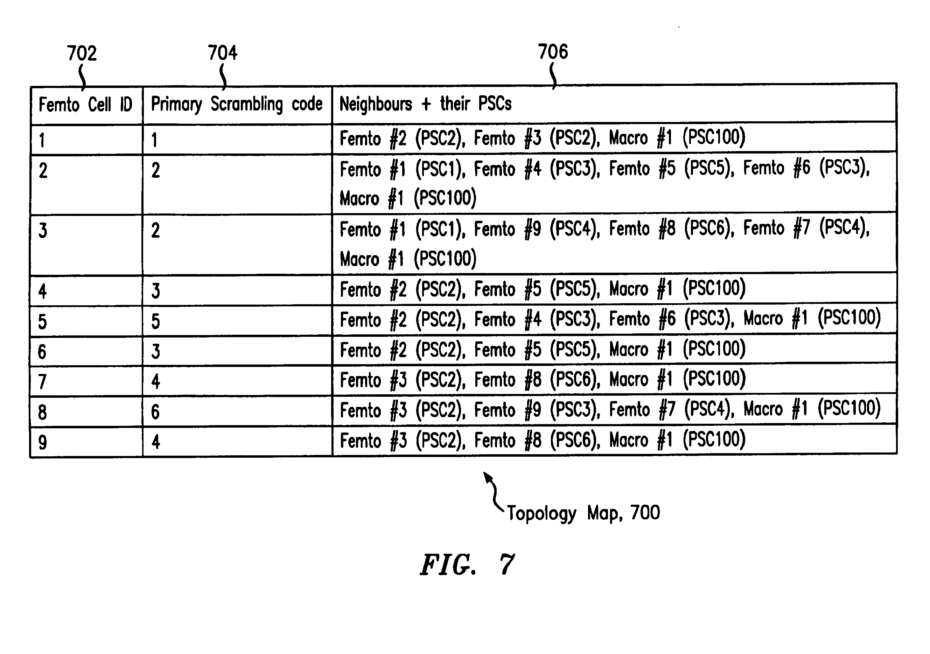

The topology map used in this example is shown in Figure 7. The topology map 700 consists of three sets of entries: namely Femtocell Identifiers 702, the primary scrambling codes that they use 704, and a third set 706 of neighbours and their primary scrambling codes.

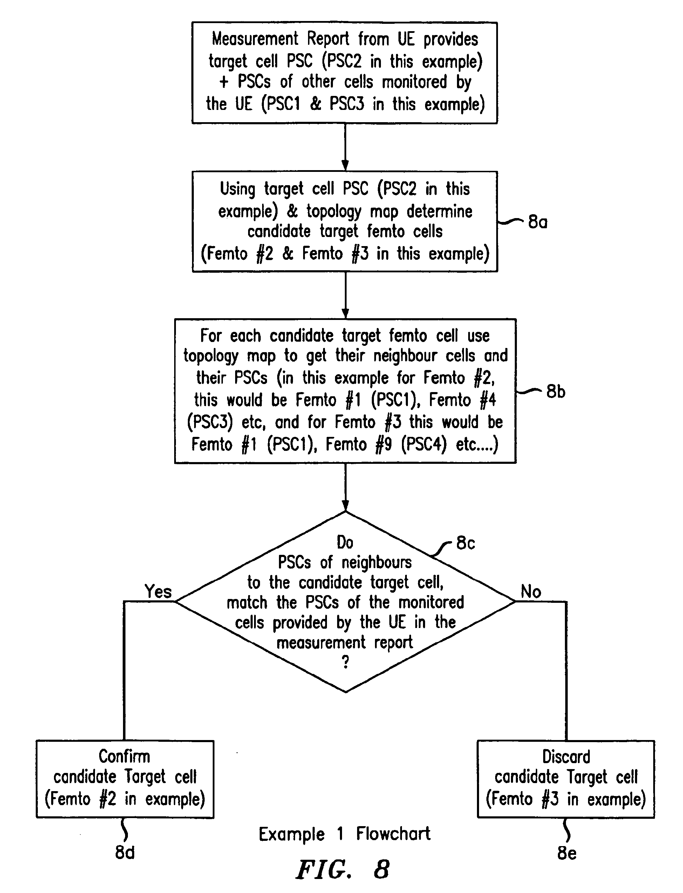

As shown in Figure 8, in this example, the gateway 230 uses (step 8a) the target cell PSC (PSC2 in this example) to identify handover candidates (Femto2 and Femto 3 in this example, both of which use PSC2). For each handover candidate, the gateway then uses (step 8b) the topology map to identify the neighbours of each handover candidate and the PSCs of those neighbours. In this example, for Fcmto2, neighbours Femto1 (PSC1), Femto4(PSC 3), Femto5(PSC5) and Femto6 (PSC3) are identified. For Femto3, neighbours Femto 1(PSC1), Femto9(PSC4), Femto7 (PSC4) and Femto8 (PSC6).

A query is then made (step 8c) as to whether the PSCs of the neighbours of the candidate match the PSCs of the neighbours of the candidate cell provided by the user terminal in the measurement report. In this example the expected PSCs for Femto2's neighbours are PSC1, PSC3, and PSC5 and this agrees with the measurement report indicating those PSCs are detected in addition to the PSC of Femto2. Accordingly Femto2 is confirmed (step 8d) as the handover candidate.

Conversely, the expected PSCs for Femto3's neighbours are PSC1, PSC4, and PSC6 and this does not agree agrees with the measurement report indicating PSC1, PSC3 and PSC5 are detected in addition to the PSC2 of Femto2. Accordingly, Femto3 is discarded (step 8e) as a handover candidate.

### Femtocell to Femtocell Handover

For femtocell to femtocell handovers, the PSCs of neighbouring femtocells that are monitored by the user terminal are used to aid identification of the target handover cell.

Each femto includes a memory in which is stored information about its neighbouring base stations; for convenience this information is referred to as a topology map.

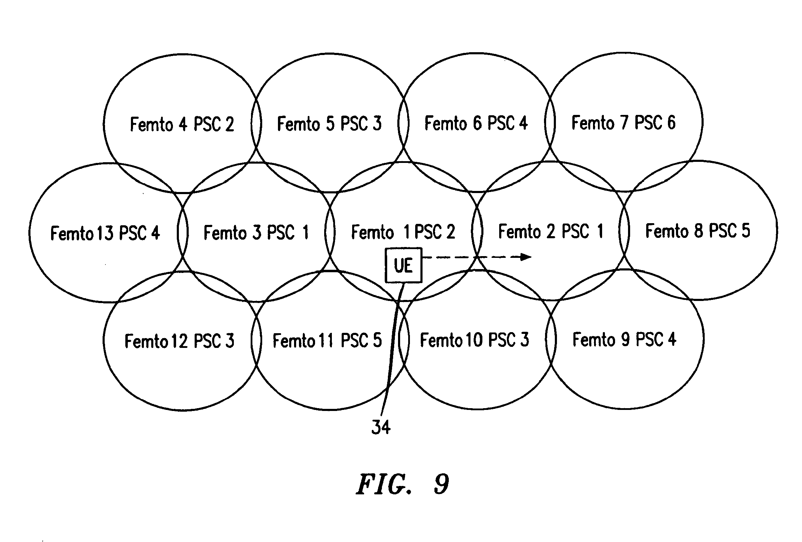

As shown in Figure 9, in this example, thirteen femtos are shown. Of these thirteen, Femto1 uses primary scrambling code PSC2, whilst Femto2 and Femto3, which are neighbours to Femto 1 both use primary scrambling code PSC 1. Femto 1 also has neighbour Femto5(using PSC3), Femto6(using PSC4), Femto10 (using PSC3) and Femto11 (using PSC5). Femto2, in addition to neighbours Femto 1, Femto2 an Femto 10 also has further neighbouring femtos: Femto7(using PSC6), Femto8 (using PSC5) and Femto9 (using PSC4). Femto3, in addition to neighbours Femto 1, Femto5 and Femto11 also has further neighbouring femtos: Femto4(using PSC2), Femto 12 (using PSC3) and Femto13(using PSC4).

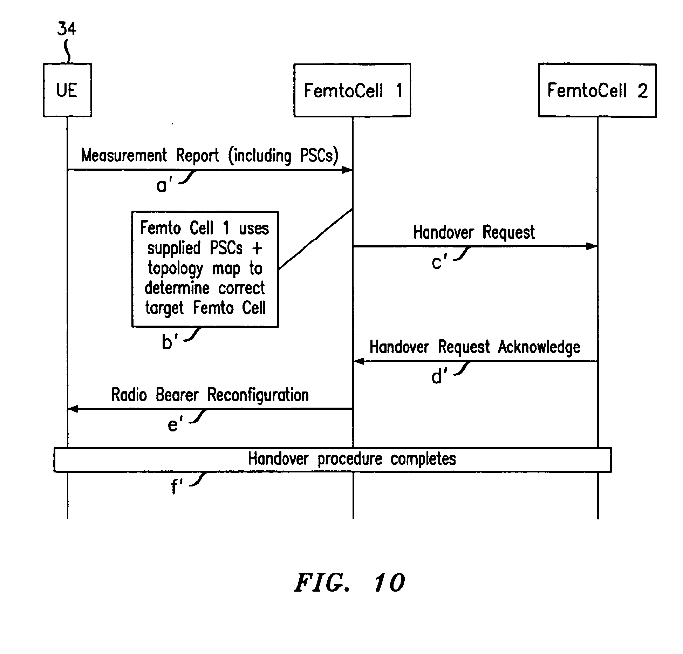

Referring to Figure 10, which is a Universal Mobile Telecommunications System (UMTS) example, the user terminal 34 sends measurement reports to the current ("source ") femto to which the user terminal is connected, namely Femto 1 in this example. Each report includes data of the received signal strength and quality of signals received from various femtos together with the respective primary scrambling codes used. The measurement reports are of known type, for example 1A, 1B or 1C as defined in Third Generation Partnership Project (3GPP) Technical Specification TS25.331. In particular the user terminal 34 sends (step a' as shown in Figure 10) a measurement report that indicates that a new femto is detected that provides a better quality connection than the current femto ("Femto 1") and that new femto uses PSC1. The measurement report provides signal quality information for signals using PSCs in a monitored set, namely PSC1, PSC3, PSC4 , PSC5 and PSC6. These are the PSCs of Femto2 and Femto6 through Femto 10.

As a next step, Femto 1 uses (step b') the primary scrambling codes supplied together with the 'topology map', in other words the recorded information about neighbour relations between base stations, in order to identify the correct femto as the target for handover of the call connection with the user terminal 34. In this case, as between Femto2 and Femto3, both of which use PSC1, the target is identified as being Femto2.

Femto 1 then sends (step c') a handover request to Femto2, which replies (step d') with a handover request acknowledgement to Femto 1. Femto 1 then sends (step e') a radio bearer reconfiguration message to the user terminal 34 so as to effect the handover to the identified femto, namely Femto2. The handover procedure is then continued (step f) to completion.

We shall now consider in more detail the topology map and its use.

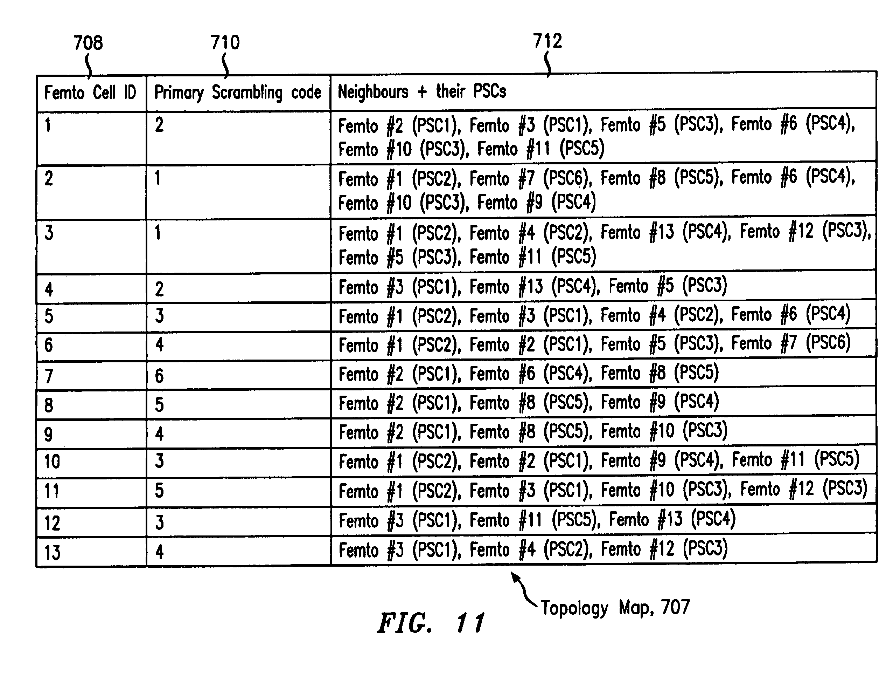

The topology map used in this example is shown in Figure 11. The topology map 707 consists of three sets of entries, namely: Femtocell Identifiers 708, the primary scrambling codes that they use 710, and a third set 712 of neighbours and their primary scrambling codes.

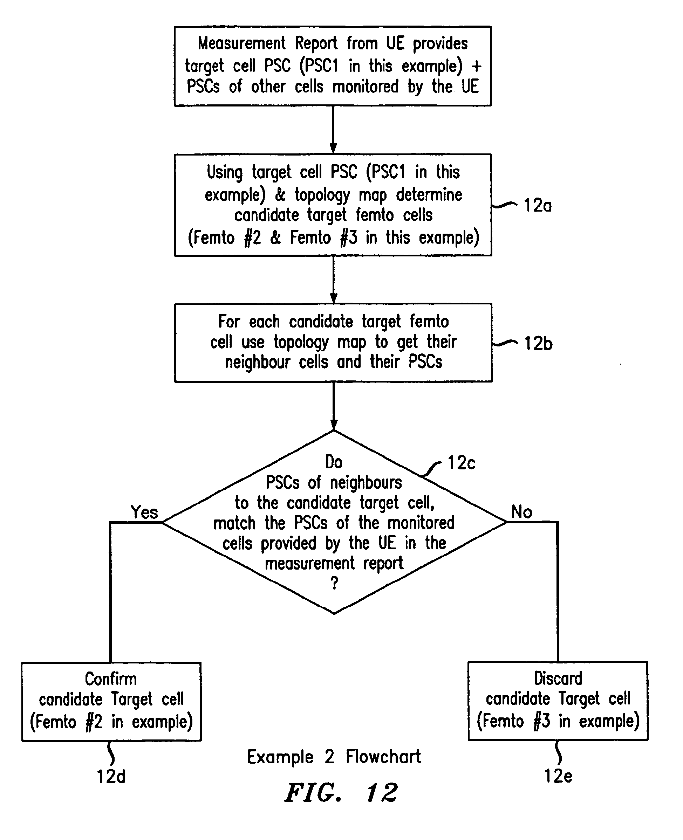

As shown in Figure 12, in this example, Femto I uses (step 12a) the target cell PSC (PSC1 in this example) to identify handover candidates (Femto2 and Femto 3 in this example, both of which use PSC1). For each handover candidate, Femto 1 uses (step 12b) the topology map to identify the neighbours (other than Femto 1) of each handover candidate and the PSCs of those neighbours. In this example, for Femto2, neighbours Femto7(PSC 6), Femto8(PSC5), Femto6 (PSC4), Femto 10(PSC3) and Femto9(PSC4) are expected. For Femto3, neighbours are expected to be, Femto4 (PSC2), Femto13(PSC4), Femto12 (PSC3), Femto5(PSC3)and Femto11 (PSC5). Although Femto1 is, strictly speaking, a neighbour of Femto2 and Femto3, Femto1 is not considered to provide a PSC to monitor as the user terminal is currently connected to Femto1 so Femto1 is not a handover candidate.

A query is then made(step 12c) as to whether the expected PSCs of the neighbours of the candidate match the PSCs of the neighbours of the candidate cell provided by the user terminal in the measurement report. In this example the expected PSCs for Femto2' neighbours are PSC3, PSC4, PSC5 and PSC6. This agrees with the measurement report indicating those PSCs are detected in addition to the PSC of Femto2. Accordingly Femto2 is confirmed (step 12d) as the handover candidate.

Conversely, the expected PSCs for Femto3's neighbours are PSC2, PSC3, PSC4, and PSC5 and this does not agree with the measurement report indicating primary scrambling codes of handover candidate neighbours of PSC3, PSC4 , PSC5 and PSC6, that are detected in addition to PSC1. Accordingly, Femto3 is discarded (step 12e) as a handover candidate.

Other similar embodiments use related or other technologies, for example Long Term Evolution (LTE), Code Division Multiple Access (CDMA).

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of identifying a base station to which to handover a call connection with a user terminal,
the method comprising:
comparing (8a) the target cell primary scrambling code in a report of signals detected by the user terminal to those expected from base stations to determine a set of handover candidate base stations;
**characterised by** the method further comprising:
comparing (8c) the other primary scrambling codes in the report of signals detected by the user terminal to those expected according to a record identifying for each handover candidate base station its neighbouring base stations and the primary scrambling codes of the neighbouring base stations, and upon a match being found by this comparison (8c) the base station for handover is identified (8d).

2. A method according to claim 1, in which the user terminal detects signals from a monitored set of base stations and provides (Fig 6:a) information as to the primary scrambling code and quality of detected signals in a measurement report.

3. A method according to claim 1 or claim 2, in which the handover is from a macrocell base station to a femtocell base station, and the comparison is undertaken (Fig 6:d) by a femtocell controller/gateway (230) which stores information of the primary scrambling codes expected from each handover candidate base station and its respective neighbouring base stations.

4. A method according to claim 3, in which the Cell ID of the macrocell is used to select the set of the handover candidate base stations.

5. A method according to claim 1 or claim 2, in which the handover is from a first femtocell base station to a second femtocell base station, and the comparison is undertaken by the first femtocell base station which stores information of the primary scrambling codes expected from each handover candidate base station and its respective neighbouring base stations.

6. A method according to any preceding claim, in which the base stations are Universal Mobile Telecommunications System (UMTS) base stations.

7. A method according to any preceding claim, in which upon the base station to which to handover being identified, a handover request (Fig 6:e) is sent to the base station for handover.

8. A network node (230) comprising a processor (232) configured to identify a base station to which to handover a call connection with a user terminal,
the processor being configured to compare the target cell primary scrambling code in a report of signals detected by the user terminal to those expected for each base stations to determine a set handover candidate base stations,
**characterised in that**
the network node comprises a memory (234) configured to store a record identifying for each handover candidate base station its neighbouring base stations and the primary scrambling codes of the neighbouring base stations;
the processor is also configured to compare (8c) the other primary scrambling codes in the report of signals detected by the user terminal to those expected according to the record, whereby upon a match being found by this comparison (8c), the base station for handover is identified (8d).

9. A network node according to claim 8, which is a femtocell controller/gateway configured to identify the femtocell base station for handover in a handover from a macrocell base station to a femtocell base station.

10. A network node according to claim 8, in which the network node is a femtocell base station.

11. A network node according to claim 10, in which the femtocell base station is the femtocell base station from which the handover is made.

## Patentansprüche

1. Verfahren zur Identifizierung einer Basisstation, an welche eine Anrufverbindung mit einem Benutzerendgerät übergeben werden soll,
wobei das Verfahren umfasst:
Vergleichen des (8a) primären Verwürfelungscodes der Zielzelle in einem Bericht der von dem Benutzerendgerät erkannten Signale mit den von Basisstationen erwarteten Signalen, um eine Reihe von Handover-Kandidatenbasisstationen zu ermitteln;
**dadurch gekennzeichnet, dass** das Verfahren weiterhin umfasst:
Vergleichen (8c) der anderen primären Verwürfelungscodes in dem Bericht der von dem Benutzerendgerät erkannten Signale mit den gemäß einem Eintrag, der für jede Handover-Kandidatenbasisstation deren benachbarte Basisstationen identifiziert, erwarteten Signalen und den primären Verwürfelungscodes, und wenn bei diesem Vergleich (8c) eine Übereinstimmung gefunden wird, wird die Basisstation für den Handover identifiziert (8d).

2. Verfahren nach Anspruch 1, wobei das Benutzerendgerät Signale aus einer überwachten Reihe von Basisstationen erkennt und Informationen in Bezug auf die primären Verwürfelungscodes und die Qualität der erkannten Signal in einem Messbericht bereitstellt (Fig 6:a).

3. Verfahren nach Anspruch 1 oder 2, wobei der Handover von einer Makrozellen-Basisstation an eine Femtozellen-Basisstation erfolgt und der Vergleich (Fig 6:d) von einem Femtozellen-Controller/Gateway (230), welcher Informationen des von jeder Handover-Kandidatenbasisstation und deren jeweiligen benachbarten Basisstationen erwarteten primären Verwürfelungscodes speichert, durchgeführt wird.

4. Verfahren nach Anspruch 3, wobei die Zellen-ID der Makrozelle verwendet wird, um die Reihe der Handover-Kandidatenbasisstationen auszuwählen.

5. Verfahren nach Anspruch 1 oder 2, wobei der Handover von einer ersten Femtozellen-Basisstation an eine zweite Femtozellen-Basisstation erfolgt und der Vergleich von der ersten Femtozellen-Basisstation, welche Informationen des von jeder Handover-Kandidatenbasisstation und deren jeweiligen benachbarten Basisstationen erwarteten primären Verwürfelungscodes speichert, durchgeführt wird.

6. Verfahren nach einem beliebigen der vorstehenden Ansprüche, wobei die Basisstationen UMTS-Basisstationen (Universal Mobile Telecommunications System) sind.

7. Verfahren nach einem beliebigen der vorstehenden Ansprüche, wobei, nachdem die Basisstation, an welche der Handover erfolgen soll, identifiziert wurde, eine Handover-Anforderung (Fig 6:e) für den Handover an die Basisstation gesendet wird.

8. Netzwerkknoten (230) mit einem Prozessor (232), welcher für die Identifizierung einer Basisstation, an welche eine Anrufverbindung mit einem Benutzerendgerät übergeben werden soll, konfiguriert ist,
wobei der Prozessor dafür konfiguriert ist, den primären Verwürfelungscode der Zielzelle in einem Bericht der von dem Benutzerendgerät erkannten Signale mit den Signalen, die für jede Basisstation erwartet werden, zu vergleichen, um eine Reihe von Handover-Kandidatenbasisstationen zu ermitteln,
**dadurch gekennzeichnet, dass**
der Netzwerkknoten einen Speicher (234) umfasst, welcher dafür konfiguriert ist, einen Eintrag, welcher für jede Handover-Kandidatenbasisstation deren benachbarten Basisstationen identifiziert, sowie die primären Verwürfelungscodes der benachbarten Basisstationen zu speichern;
wobei der Prozessor ebenfalls dafür konfiguriert ist, die anderen primären Verwürfelungscodes im Bericht von von dem Benutzerendgerät erkannten Signalen mit den Signalen, die gemäß dem Eintrag erwartet werden, zu vergleichen (8c), wobei, wenn anhand dieses Vergleichs (8c) eine Übereinstimmung gefunden wird, die Basisstation für den Handover identifiziert (8d) wird.

9. Netzwerkknoten nach Anspruch 8, wobei dieser Netzwerkknoten ein für die Identifizierung der Femtozellen-Basisstation zur Übergabe in einem Handover von einer Makrozellen-Basisstation an eine Femtozellen-Basisstation konfigurierter Femtozellen-Controller/Gateway ist.

10. Netzwerkknoten nach Anspruch 8, wobei dieser Netzwerkknoten eine Femtozellen-Basisstation ist

11. Netzwerkknoten nach Anspruch 10, wobei die Femtozellen-Basisstation diejenige Femtozellen-Basisstation ist, ab welcher der Handover erfolgt.

## Revendications

1. Procédé d'identification d'une station de base vers laquelle transférer une connexion d'appel avec un terminal utilisateur,
le procédé comprenant les étapes suivantes :
comparer (8a) le code de brouillage principal de cellule cible dans un rapport de signaux détectés par le terminal utilisateur à ceux prévus pour les stations de base afin de déterminer un ensemble de stations de base candidates au transfert ;
**caractérisé en ce que** le procédé comprend en outre l'étape suivante :
comparer (8c) les autres codes de brouillage principaux dans le rapport de signaux détectés par le terminal utilisateur à ceux prévus conformément à un enregistrement identifiant pour chaque station de base candidate au transfert ses stations de base voisines et les codes de brouillage principaux des stations de base voisines, et lorsque cette comparaison (8c) trouve une correspondance, la station de base pour le transfert est identifiée (8d).

2. Procédé selon la revendication 1, dans lequel le terminal utilisateur détecte des signaux provenant d'un ensemble surveillé de stations de base et fournit (Fig 6:a) des informations concernant le code de brouillage principal et la qualité des signaux détectés dans un rapport de mesure.

3. Procédé selon la revendication 1 ou la revendication 2, dans lequel le transfert s'effectue depuis une station de base macrocellulaire vers une station de base femtocellulaire, et la comparaison est mise en oeuvre (Fig 6:d) par un(e) contrôleur/passerelle femtocellulaire (230) qui stocke des informations des codes de brouillage principaux prévus pour chaque station de base candidate au transfert et de ses stations de base voisines respectives.

4. Procédé selon la revendication 3, dans lequel l'identification de cellule de la macrocellule est utilisée pour sélectionner l'ensemble des stations de base candidates au transfert.

5. Procédé selon la revendication 1 ou la revendication 2, dans lequel le transfert s'effectue depuis une première station de base femtocellulaire vers une deuxième station de base femtocellulaire, et la comparaison est mise en oeuvre par la première station de base femtocellulaire qui stocke des informations des codes de brouillage principaux prévus pour chaque station de base candidate au transfert et de ses stations de base voisines respectives.

6. Procédé selon l'une quelconque des revendications précédentes, dans lequel les stations de base sont des stations de base d'un système de télécommunications mobiles universelles, UMTS.

7. Procédé selon l'une quelconque des revendications précédentes dans lequel, lors de l'identification de la station de base vers laquelle effectuer le transfert, une demande de transfert (Fig 6:e) est envoyée à la station de base pour le transfert.

8. Noeud de réseau (230) comprenant un processeur (232) configuré pour identifier une station de base vers laquelle transférer une connexion d'appel avec un terminal utilisateur,
le processeur étant configuré pour comparer le code de brouillage principal de cellule cible dans un rapport de signaux détectés par le terminal utilisateur à ceux prévus pour chaque station de base afin de déterminer un ensemble de stations de base candidates au transfert,
**caractérisé en ce que**
le noeud de réseau comprend une mémoire (234) configurée pour stocker un enregistrement identifiant pour chaque station de base candidate au transfert ses stations de base voisines et les codes de brouillages principaux des stations de base voisines ;
le processeur est également configuré pour comparer (8c) les autres codes de brouillage principaux dans le rapport de signaux détectés par le terminal utilisateur à ceux prévus conformément à l'enregistrement, la station de base pour le transfert étant identifiée (8d) lorsque cette comparaison (8c) trouve une correspondance.

9. Noeud de réseau selon la revendication 8, qui est un(e) contrôleur/passerelle femtocellulaire configuré(e) pour identifier la station de base femtocellulaire pour le transfert dans un transfert depuis une station de base macrocellulaire vers une station de base femtocellulaire.

10. Noeud de réseau selon la revendication 8, dans lequel le noeud de réseau est une station de base femtocellulaire.

11. Noeud de réseau selon la revendication 10, dans lequel la station de base femtocellulaire est la station de base femtocellulaire à partir de laquelle le transfert est effectué.
